# FASCICULE DE BREVET EUROPEEN

(11) **EP 0 872 749 B1**
(45) Date de publication et mention de la délivrance du brevet: **08.08.2007**
(21) Numéro de dépôt: 97106094.2
(22) Date de dépôt: 14.04.1997
(51) Int. Cl.: G02B 6/44

(54) **Procédé de fabrication d'un câble optique**
Verfahren zur Herstellung eines Lichtwellenleiterkabels
Method of fabrication of a fibre optic cable

(43) Date de publication de la demande: 21.10.1998
(73) Titulaire: APSwissTech S.A., 1462 Yvonand (CH)
(72) Inventeur: Kertscher, Eberhard, 1462 Yvonand (CH); Buluschek, Bruno, 1026 Echandens (CH)
(74) Mandataire: Nithardt, Roland

(56) Documents cités:
- EP-A- 0 108 510
- EP-A- 0 425 160
- EP-A- 0 744 639
- US-A- 5 143 274
- US-A- 5 247 599
- US-A- 5 372 757

## Description

La présente invention est relative à la fabrication de câbles optiques comportant une ou plusieurs fibres optiques.

La fabrication de tels câbles consiste essentiellement à disposer la ou les fibres optiques dans un tube de protection qui est ensuite rempli d'une masse visqueuse dans laquelle sont noyées les fibres.

L'une des difficultés majeures rencontrées dans la fabrication de tels câbles réside dans la fragilité des fibres optiques dont on doit éviter dans toute la mesure du possible la mise en tension longitudinale excessive à l'intérieur du tube de protection sous peine de voir se détériorer les qualités optiques des fibres.

Il est connu de pallier cette difficulté en donnant, lors de la fabrication du câble, une longueur à la fibre légèrement supérieure à celle du tube de protection. Cette différence de longueur entre tube et fibres peut se situer entre 0,01 % et 1 %, environ, selon la construction et l'utilisation future du câble.

Les câbles en question sont utilisables comme câbles aériens ou enterrés, et ils peuvent avantageusement être associés à des câbles de transport de l'électricité à haute tension dans lesquels ils peuvent être incorporés en particulier dans le conducteur de terre.

Selon un procédé de fabrication de tels câbles connu du document DE 2 505 621, on effectue l'extrusion autour des fibres optiques d'un tube en matière plastique qui est ensuite rapidement refroidi pour en provoquer le retrait longitudinal. Après refroidissement, le tube en matière plastique s'est beaucoup rétréci, alors que les fibres optiques qui ont un très faible coefficient de dilatation thermique vis-à-vis de celui de la matière plastique, se sont peu rétrécies. Elles se trouvent alors incorporées dans le tube en y étant librement disposées sans qu'elles soient soumises à aucune tension longitudinale.

Selon ce document antérieur, un second tube en matière plastique est ensuite disposé autour du premier, le diamètre de ce second tube étant nettement plus grand que celui du premier tube.

Il est par ailleurs connu par le document DE 2 757 786, d'entourer d'un tube en matière plastique des fibres optiques, déroulées d'un dévidoir freiné, de chauffer l'ensemble pour l'allonger, puis de le passer sur un cabestan de manière à éviter par frottement mutuel le déplacement relatif en longueur des fibres et du tube en aval de l'emplacement de refroidissement du tube.

Par ailleurs, il est connu de plusieurs autres documents, à savoir par exemple le FR 2 650 081, le EP 0 299 123, le US 4 372 792, le US 5 263 239 et le US 5 555 338, d'entourer les fibres optiques d'un tube métallique, notamment en acier éventuellement inoxydable. Ces procédés connus, s'ils permettent d'obtenir des câbles dont la structure est d'une grande solidité, ont cependant un inconvénient majeur en ce que la sur-longueur est très difficile à obtenir. En effet, si on tente de l'obtenir par le procédé thermique basé sur la différence des coefficients de dilatation, on se heurte à la température trop élevée à laquelle il faut chauffer le métal, température qui est insupportable pour les fibres. Si d'un autre côté, on tente de résoudre la difficulté en allongeant le tube métallique par traction pendant que les fibres y sont placées, puis de relâcher la tension sur le tube, on se heurte au module d'élasticité très élevé des métaux, avec le risque que le tube ne se rompt par suite de la force de traction élevée qui est alors nécessaire. On a imaginé d'autres méthodes pour résoudre le problème de la sur-longueur des fibres dans le cas des tubes de protection métalliques, mais on s'est toujours trouvé confronté à des complications extrêmes des procédés à utiliser.

L'invention a pour but de proposer un procédé de fabrication d'un câble optique et un câble optique réalisé par ce procédé, qui réunissent les avantages des propositions antérieures brièvement décrites ci-dessus, sans en présenter les inconvénients.

L'invention a donc tout d'abord pour objet un procédé de fabrication d'un câble optique comportant au moins une fibre optique placée dans une gaine de protection comprenant deux tubes coaxiaux, dont le tube intérieur fait en matière plastique contient ladite fibre, ce procédé consistant :
- à produire un premier tube en matière plastique dans lequel est disposée au moins une fibre optique, ladite fibre optique présentant une sur-longueur par rapport à la longueur dudit tube, et
- à entourer ledit premier tube d'un second tube,
- ledit procédé étant caractérisé en ce que
- ledit second tube est réalisé en métal,
et en ce qu'il consiste en outre:
- à former ledit second tube autour dudit premier tube à partir d'un ruban métallique dont les rives longitudinales sont jointes progressivement autour dudit premier tube tout en étant fixées l'une à l'autre, et
- à resserrer ledit second tube contre ledit premier tube.

En utilisant selon l'invention un premier tube en matière plastique dans lequel est ou sont disposées la ou les fibres optiques, on peut en obtenir relativement facilement la sur-longueur voulue par rapport au tube, tandis que le second tube en métal n'a pas à subir de traitement spécial pour obtenir cette sur-longueur. Ce second tube servira à assurer la cohérence structurelle du câble et ce avec une grande efficacité du fait qu'il existe un contact intime entre les deux tubes. En outre, pendant la soudure du tube extérieur, les fibres sont protégées de la chaleur et ne peuvent être endommagées par l'outil de soudure.

D'autres caractéristiques et avantages de l'invention apparaîtront au cours de la description qui va suivre, donnée uniquement à titre d'exemple et faite en se référant aux dessins annexés sur lesquels :
- la figure 1 est une vue en coupe radiale d'un câble obtenu par le procédé de fabrication selon l'invention;
- les figures 2a à 2c montrent une vue schématique en élévation d'une installation pour la mise en oeuvre du procédé de fabrication selon l'invention permettant de fabriquer un câble optique selon la figure 1; et
- les figures 3a et 3b représentent une vue en plan de cette installation.

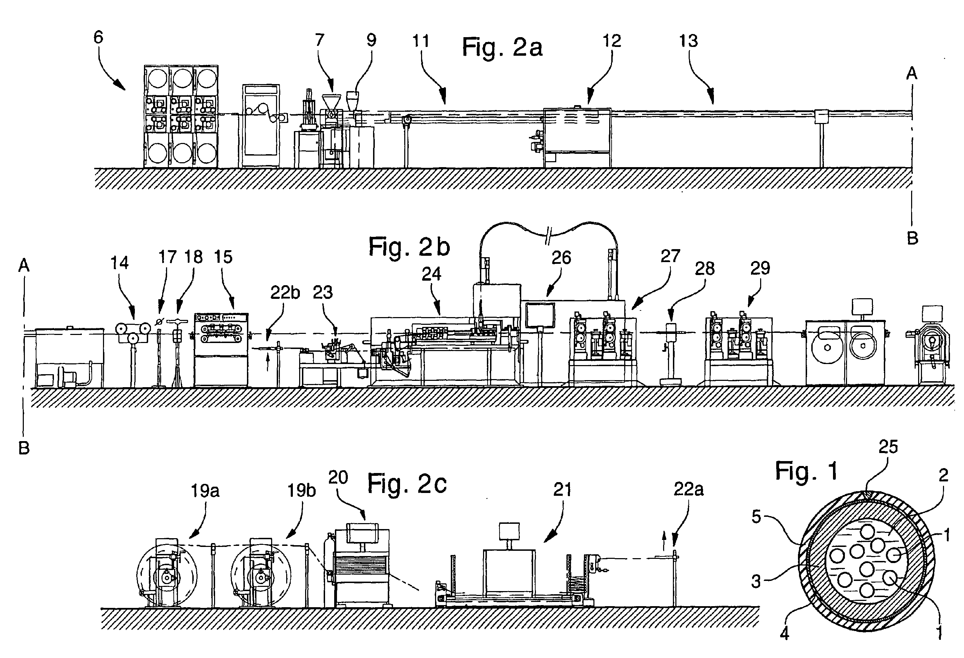

L'exemple de réalisation préféré d'un câble optique selon l'invention est représenté sur la figure 1. Il comprend une pluralité de fibres optiques 1, ici neuf fibres, noyées dans une masse visqueuse 2 telle qu'un gel aux silicones. Cet ensemble remplit entièrement l'espace cylindrique intérieur d'une gaine de protection. Selon l'invention, celle-ci comprend un premier tube 3 en matière plastique qui, dans le présent exemple, est entouré d'une couche 4 d'adhésif durci entourée à son tour coaxialement par un second tube extérieur 5 en métal. Ce dernier est rendu solidaire du premier tube en matière plastique 3 après durcissement de l'adhésif de la couche 4. On notera cependant que dans certaines conditions, on peut se dispenser d'utiliser la couche adhésive 4.

Le nombre de fibres optiques enrobées dans la masse visqueuse 2 peut être quelconque; il ne dépend que des possibilités technologiques offertes et des exigences d'emploi du câble optique considéré.

L'épaisseur de la paroi du premier tube 3 en matière plastique peut être choisie entre 0,2 et 2 mm, une valeur préférée étant 0,5 mm. Le matériau dont est fait le premier tube 3 peut être choisi parmi les matières plastiques résistant aux hautes températures, les matériaux suivants étant envisageables: PBT, PA, PP et PC, par exemple.

L'adhésif de la couche 4 peut être toute colle applicable à chaud et durcissable moyennant chauffage. Un exemple de colle utilisable est celle fabriquée par la Société Mitsui sous la marque ADMER.

Quant au second tube métallique 5, il est réalisé de préférence en un métal résistant à la corrosion comme l'aluminium, le cuivre, le titane, l'acier inoxydable, l'acier, galvanisé ou rendu résistant à la corrosion d'une autre manière, et d'autres métaux analogues. Le choix du métal du second tube 5 est dicté par essentiellement par le fait qu'il doit résister à la corrosion, qui risque d'apparaître lorsque le câble est utilisé conjointement avec des conducteurs électriques réalisés en un métal dissemblable, ceci pouvant être le cas dans les lignes à haute tension par exemple. Ainsi, on préfère utiliser l'acier inoxydable pour le tube 5, que l'on recouvre d'une couche d'aluminium, si les conducteurs électriques de la ligne sont en aluminium, par exemple.

L'épaisseur de la paroi du second tube 5 peut être choisie entre 0,08 et 1 mm par exemple, une valeur préférée étant 0,3 mm.

Conformément au procédé de l'invention (figures 2a à 3b), les fibres 1 sont déroulées d'un dévidoir 6 qui les maintient sous une tension constante. De la matière plastique est extrudée dans une extrudeuse 7 et passée dans une filière 8 dans laquelle est formée le premier tube 3. Les fibres 1 sont enfilées dans cette filière 8.

Un adhésif à haute température est fondu dans une autre extrudeuse 9 et déposé sur le premier tube 3 qui vient d'être formé. L'adhésif peut éventuellement être co-extrudé en étant apporté sur le premier tube 3 pendant le passage dans la filière 8.

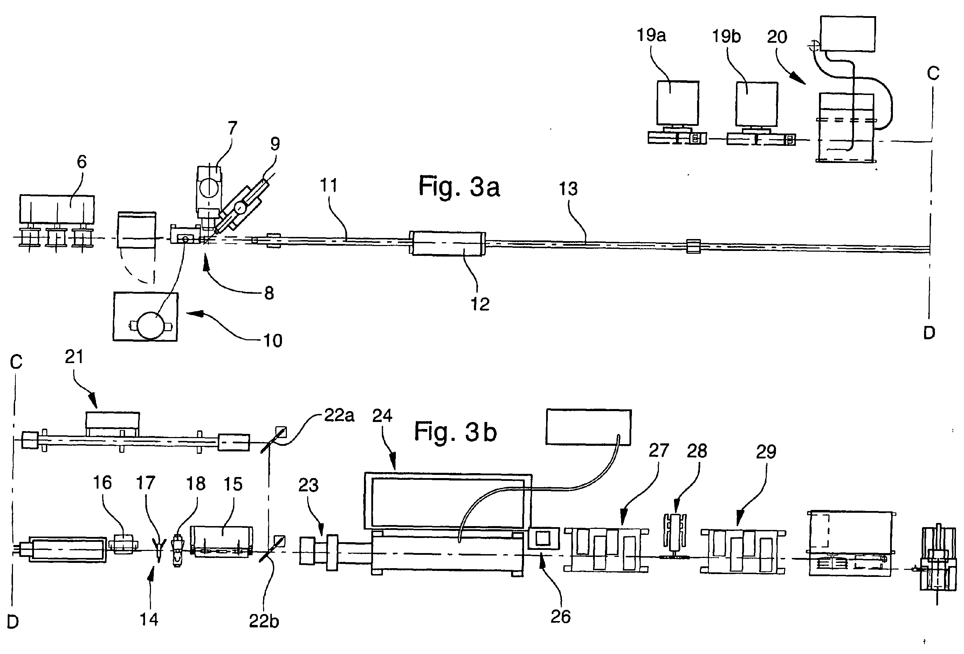

Puis, un poste d'injection 10 (figure 3a) injecte dans l'espace interne du premier tube 3, la masse visqueuse 2 de manière à le remplir totalement et éviter ainsi toute pénétration d'humidité dans ce premier tube 3. L'ensemble ainsi obtenu quitte la filière 8 et passe successivement dans une première goulotte de refroidissement 11, dans un dispositif de traction 12, puis dans une seconde goulotte de refroidissement 13 où le refroidissement peut se poursuivre. Dans les deux goulottes de refroidissement 11 et 13, le premier tube 3 subit un retrait longitudinal déterminé par la différence des températures en amont et en aval de ces goulottes. De ce fait, les fibres 1 présentent une certaine sur-longueur par rapport au tube 3.

Après avoir passé dans une installation de mesure 14, l'ensemble du premier tube 3, des fibres 1 et du gel 2 passe de nouveau dans un dispositif de traction 15. Entre les dispositifs de traction 12 et 15, la tension du premier tube 3 est maintenue à une valeur constante.

L'installation de mesure 14 comprend une unité de mesure de tension 16 commandant les dispositifs de traction 12 et 15, une unité 17 de mesure et de surveillance de diamètre destinée à mesurer le diamètre du premier tube 3 afin de maintenir ce diamètre à une valeur calibrée prédéterminée, ainsi qu'une unité 18 de mesure de la vitesse de défilement du premier tube 3 à la sortie de la deuxième goulotte de refroidissement 13.

Une autre mesure est effectuée en amont de la filière 8 pour relever la vitesse de défilement des fibres optiques 1 à cet endroit. Les mesures de vitesse des fibres 1 et du tube 3 près de la filière 8 et dans l'installation 14 peuvent être réalisées au moyen d'un dispositif de mesure à laser à haute précision dont la précision peut être de l'ordre de 0,002 %. A partir des deux vitesses relevées, les dispositifs de mesure sont capables de déterminer le rapport entre les longueurs du tube 3 et des fibres 1 situées entre eux. Le rapport calculé est constamment comparé à un rapport de consigne qui peut être de 0,2 % par exemple. En cas d'écart constaté par rapport à cette valeur de consigne, un signal de commande est engendré qui est appliqué au dévidoir 6 pour modifier la tension longitudinale appliquée aux fibres 1 dans un sens qui ramène le rapport de longueur à la valeur de consigne.

Dans ce qui précède, on a décrit à titre d'exemple, une méthode thermique d'obtention de la sur-longueur des fibres 1 par rapport au tube 3. On notera cependant, que cette sur-longueur peut également être obtenue par une méthode mécanique consistant à soumettre le tube 3 à une traction mécanique pendant que les fibres 1 y sont introduites, la traction mécanique étant relâchée après cette introduction.

Un ruban métallique destiné à former le second tube 5 du câble optique est déroulé alternativement de deux dévidoirs 19a et 19b (voir figures 2c et 3a). Ces dévidoirs alimentent un poste de soudage transversal 20 permettant de joindre l'extrémité arrière d'un ruban métallique déjà en cours de passage dans l'installation et venant de l'un des dévidoirs, à l'extrémité avant d'un second ruban métallique qui va passer dans l'installation et qui est déroulé du second dévidoir. Le poste de soudage transversal 20 est suivi d'un accumulateur 21 destiné à stocker dynamiquement une certaine longueur de ruban, afin que le soudage transversal puisse s'effectuer alors que les deux extrémités de ruban à joindre sont immobiles.

Les dévidoirs 19a et 19b, le poste de soudage transversal 20 et l'accumulateur 21 sont placés latéralement par rapport au trajet principal de l'ensemble formé par les fibres 1, le gel 2 et le premier tube 3 en matière plastique. Le ruban quittant l'accumulateur 21 est donc amené sur deux renvois d'angle 22a et 22b pour être introduit sur cette trajectoire principale (figure 3b). Bien entendu, il ne s'agit ici que d'un exemple de mise en oeuvre du procédé de l'invention, d'autres dispositions des divers composants de l'installation pouvant être envisagées sans sortir du cadre de l'invention.

La première opération que subit le ruban est une mise en largeur dans un poste 23 de découpage en continu. Puis, le ruban est déformé progressivement dans le poste de formage 24 dans lequel il est d'abord déformé pour constituer un second tube 5 autour du premier tube 3. Puis, ce second tube est soudé longitudinalement bord à bord comme l'indique la référence 25 sur la figure 1 dans un poste de soudage 26 placé à la suite du poste de formage 24. Le poste de soudage 26 peut être du type à laser, par exemple.

Le second tube 5 est ensuite resserré ou réduit en diamètre dans un poste de calibrage 27 pouvant être formé d'un calibreur à rouleaux ou à filière. Le calibrage a pour effet que le second tube 5 soit étroitement appliqué contre la paroi extérieure du premier tube 3, plus précisément en contact intime avec la couche d'adhésif 4 qui revêt extérieurement le premier tube 3.

Ensuite, l'ensemble passe dans un dispositif 28 de chauffage à haute fréquence permettant de chauffer le second tube 5 dans une mesure telle que la couche d'adhésif 4 fonde et se lie à la surface interne du second tube 5.

Eventuellement, l'ensemble peut alors avantageusement subir une autre opération de resserrage dans un poste de calibrage 29 pour subir une nouvelle réduction de diamètre afin d'amener le câble à son diamètre nominal.

Le câble terminé est alors conduit dans un dispositif de coupe en longueurs 30, puis dans un enrouleur 31.

Les avantages principaux du procédé que l'on vient de décrire résident essentiellement dans une très bonne maîtrise de la sur-longueur, avantage auquel s'ajoute une très bonne solidité du câble du fait de la présence du second tube en métal. De plus, pendant l'opération de soudage du second tube 5, les fibres ne risquent aucune détérioration car elles sont séparées du second tube par le premier tube. Il en est ainsi, même si le soudage conduit à la formation d'un bourrelet de soudure à l'intérieur du second tube. Le second tube peut par ailleurs être à protection intrinsèque contre la corrosion (cuivre aluminium, etc.) ou bien être protégé par une couche de revêtement qui peut être telle que la soudure puisse s'effectuer directement sans traitement préalable spécial. Ceci est particulièrement avantageux, lorsque le câble selon l'invention est intégré dans un câble plus complexe comportant plusieurs autres éléments métalliques, par exemple des conducteurs électriques, un tel câble étant souvent utilisé dans les lignes à haute tension.

Enfin, tous les équipements utilisés dans le procédé de l'invention sont classiques en soi, ce qui en facilite la mise en oeuvre à un prix raisonnable.

## Revendications

1. Procédé de fabrication d'un câble optique comportant au moins une fibre optique (1) placée dans une gaine de protection comprenant deux tubes coaxiaux (3, 5), dont le tube intérieur (3) fait en matière plastique contient ladite fibre (1), ce procédé consistant :
- à produire un premier tube (3) dans lequel est disposée au moins une fibre optique (1), ladite fibre optique présentant une sur-longueur par rapport audit premier tube (3), et
- à entourer ledit premier tube (3) d'un second tube (5),
ce procédé étant **caractérisé en ce que**
- ledit second tube (5) est réalisé en métal, et **en ce qu'**il consiste en outre
- à former ledit second tube (5) autour dudit premier tube (3) à partir d'un ruban métallique dont les rives longitudinales sont jointes progressivement autour dudit premier tube (3) tout en étant fixées l'une à l'autre, et
- à resserrer ledit second tube (5) contre ledit premier tube (3).

2. Procédé suivant la revendication 1, **caractérisé en ce que** les rives longitudinales dudit second tube (5) sont fixées l'une à l'autre par soudage (25).

3. Procédé suivant l'une quelconque des revendications 1 et 2, **caractérisé en ce que** ledit second tube (5) est réalisé en un métal choisi parmi l'aluminium, le cuivre, le titane et l'acier, éventuellement inoxydable ou galvanisé.

4. Procédé suivant la revendication 3, **caractérisé en ce qu'**il consiste à revêtir, le cas échéant, ledit second tube (5) d'une couche de protection contre la corrosion, de préférence en aluminium.

5. Procédé suivant l'une quelconque des revendications 1 à 4, **caractérisé en ce qu'**il consiste également à appliquer une couche d'adhésif (4) sur la surface extérieure dudit premier tube (3), ladite opération de resserrement provoquant l'adhésion entre eux desdits premier (3) et second (4) tubes.

6. Procédé suivant la revendication 5, **caractérisé en ce qu'**il consiste également, pendant l'opération de resserrement, à chauffer ledit second tube (5) pour faire fondre ledit adhésif (4).

7. Procédé suivant la revendication 6, **caractérisé en ce qu'**il consiste en outre à resserrer de nouveau ledit second tube (5) consécutivement à ladite opération de chauffage, jusqu'à obtention de son diamètre nominal.

8. Procédé suivant l'une quelconque des revendications précédentes, **caractérisé en ce qu'**il consiste :
- à extruder autour de ladite fibre (1) ledit premier tube en matière plastique (3) pendant que ladite fibre (1) est soumise à une traction longitudinale; et
à soumettre l'ensemble de ladite fibre (1) et dudit premier tube (3) à un traitement thermique de refroidissement pour obtenir ladite sur-longueur.

9. Procédé suivant la revendication 8, **caractérisé en ce qu'**il consiste en outre
- à mesurer la vitesse de défilement de ladite fibre (1) en un premier point situé en amont du point d'extrusion dudit premier tube (3) pour obtenir une première valeur de vitesse,
- à mesurer la vitesse de défilement dudit premier tube (3) en un second point situé en aval de l'exécution dudit traitement thermique pour obtenir une seconde valeur de vitesse,
- à calculer à partir desdites vitesses de défilement, les longueurs de ladite fibre (1) et dudit premier tube (3) entre lesdits premier et second points,
- à établir le rapport entre lesdites longueurs calculées pour obtenir un rapport de longueurs mesurées;
- à engendrer une valeur de consigne de rapport de longueur;
- à comparer ledit rapport de consigne avec ledit rapport mesuré; et
- à corriger la tension longitudinale dans ladite fibre (1), lorsque ledit rapport mesuré s'écarte dudit rapport de consigne, dans un sens annulant ledit écart.

10. Procédé suivant l'une quelconque des revendications 1 à 9, **caractérisé en ce qu'**il consiste en outre à appliquer une tension longitudinale audit premier tube (3) pendant et/ou après ledit traitement thermique, dans un sens opposé à celui de la tension appliquée à ladite fibre (1).

11. Procédé suivant l'une quelconque des revendications 1 à 7, **caractérisé en ce qu'**il consiste :
- à soumettre ledit premier tube (3) à une traction mécanique pendant que ladite fibre (1) y est introduite, la traction mécanique étant relâchée après cette introduction.

12. Procédé suivant la revendication 10, **caractérisé en ce qu'**une couche d'adhésif (4) est interposée entre lesdits premier et second tubes (3, 5).

## Claims

1. Method for manufacturing an optical cable including at least one optical fiber (1) placed in a protective sheath including two coaxial tubes (3, 5), the inner tube (3) thereof, made of plastic material, contains said fiber (1), this method consisting in:
- producing a first tube (3) in which at least one optical fiber (1) is arranged, said optical fiber having an overlength with respect to said tube (3), and
- surrounding said first tube (3) with a second tube (5), said method being **characterised in that**
- said second tube (5) is made of metal, and that it further consists in:
- forming said second tube (5) around said first tube (3) from a metal tape whose longitudinal edges are progressively joined around said first tube (3) while being fixed to each other, and
- shrinking said second tube (5) around said first tube (3).

2. Method according to claim 1, **characterised in that** the longitudinal edges of said second tube (5) are fixed to each other by welding (25).

3. Method according to any one of claims 1 and 2, **characterised in that** said second tube (5) is made of a metal selected from aluminium, copper, titanium and steel, possibly stainless or galvanised steel.

4. Method according to claim 3, **characterised in that** it consists in coating, if required, said second tube (5) with a protective layer to prevent corrosion, preferably with aluminium.

5. Method according to any one of claims 1 to 4, **characterised in that** it also consists in applying a layer of adhesive material (4) onto the outer surface of said first tube (3), said contracting operation causing adhesion between said first (3) and second (5) tubes.

6. Method according to claim 5, **characterised in that** it also consists in heating said second tube (5) during the contracting operation in order to melt said adhesive material (4).

7. Method according to claim 6, **characterised in that** it further consists in contracting said second tube (5) again, consecutive to said heating operation until its nominal diameter is obtained.

8. Method according to any one of the preceding claims, **characterised in that** it consists in:
- extruding around said fiber (1) said first plastic tube (3) while said fiber (1) undergoes longitudinal traction, and
- subjecting the assembly of said fiber (1) and said first tube (3) to a heat treatment to obtain said overlength.

9. Method according to claim 8, **characterised in that** it further consists in:
- measuring the speed of movement of said fiber (1) at a first point situated upstream of the point of extrusion of said first tube (3) to obtain a first speed value,
- measuring the speed of movement of said first tube (3) at a second point situated downstream of the execution of said heat treatment to obtain a second speed value,
- calculating from said speeds of movement, the lengths of said fiber (1) and said first tube (3) between said first and second points,
- establishing the ratio between said calculated lengths to obtain a ratio of measured lengths;
- generating a desired length ratio value;
- comparing said desired ratio with said measured ratio; and
- correcting the longitudinal tension in said fiber (1), when said measured ratio diverges from said desired ratio, in a direction cancelling said divergence.

10. Method according to any one of claims 1 to 9, **characterised in that** it further consists in applying a longitudinal tension to said first tube (3) during and/or after said heat treatment in an opposite direction to that of the tension applied to said fiber (1).

11. Method according to any one of claims 1 to 7, **characterised in that** it consists in:
- subjecting said first tube (3) to a mechanical traction while said fiber (1) is introduced therein, the mechanical traction being released after such introduction.

12. Method according to claim 10, **characterised in that** a layer of adhesive material (4) is interposed between said first and second tubes (3, 5).

## Patentansprüche

1. Herstellungsverfahren für ein Glasfaserkabel, welches mindestens eine Optikfaser (1) umfasst, die in einer Schutzhülle positioniert ist, die zwei koaxiale Rohre (3,5) aufweist, wobei das aus Kunststoff hergestellte Innenrohr (3) die Faser (1) enthält, wobei das Verfahren aus Folgendem besteht:
- Herstellen eines ersten Rohres (3), in dem mindestens eine Optikfaser (1) positioniert ist, wobei die Optikfaser eine Überlänge im Verhältnis zu dem ersten Rohr (3) aufweist, und
- Umschließen des ersten Rohres (3) mit einem zweiten Rohr (5),
wobei das Verfahren
**dadurch gekennzeichnet ist, dass**
- das zweite Rohr (5) aus Metall ausgeführt ist, und dass es außerdem aus Folgendem besteht:
- Ausbildung des zweiten Rohres (5) um das erste Rohr (3) aus einem Metallband, dessen Längsränder fortschreitend um das erste Rohr (3) herum verbunden werden, wobei sie aneinander befestigt werden, und
- Zusammenziehen des zweiten Rohres (5) gegen das erste Rohr (3).

2. Verfahren nach Anspruch 1,
**dadurch gekennzeichnet, dass**
die Längsränder des zweiten Rohres (5) durch Schweißen (25) aneinander befestigt werden.

3. Verfahren nach einem der Ansprüche 1 und 2,
**dadurch gekennzeichnet, dass**
das zweite Rohr (5) aus einem aus Aluminium, Kupfer, Titan und Stahl, möglicherweise rostfreiem oder galvanisiertem Stahl, ausgewählten Metall ausgeführt wird.

4. Verfahren nach Anspruch 3,
**dadurch gekennzeichnet, dass**
es gegebenenfalls aus der Auskleidung des zweiten Rohres (5) mit einer Schutzschicht gegen Korrosion, vorzugsweise aus Aluminium, besteht.

5. Verfahren nach einem der Ansprüche 1 bis 4,
**dadurch gekennzeichnet, dass**
es außerdem aus dem Auftragen einer Klebstoffschicht (4) auf die Außenfläche des ersten Rohres (3) besteht, wobei der Zusammenziehungsvorgang die Haftung zwischen dem ersten (3) und dem zweiten (5) Rohr fördert.

6. Verfahren nach Anspruch 5,
**dadurch gekennzeichnet, dass**
es außerdem aus der Erwärmung des zweiten Rohres (5) während des Zusammenziehungsvorganges besteht, um den Klebstoff (4) zum Schmelzen zu veranlassen.

7. Verfahren nach Anspruch 6,
**dadurch gekennzeichnet, dass**
es außerdem aus dem auf den Erwärmungsvorgang folgenden erneuten Zusammenziehen des zweiten Rohres (5) besteht, bis sein Solldurchmesser erreicht wird.

8. Verfahren nach einem der vorangegangenen Ansprüche,
**dadurch gekennzeichnet, dass**
es aus Folgendem besteht:
- Extrusion des ersten Rohres (3) aus Kunststoff um die Faser (1), während die Faser (1) einen Längszug durchläuft; und
- dass die Gesamtheit der Faser (1) und des ersten Rohres (3) eine Thermokühlbehandlung durchläuft, um die Überlänge zu erhalten.

9. Verfahren nach Anspruch 8,
**dadurch gekennzeichnet, dass**
es außerdem aus Folgendem besteht:
- Messen der Abspulgeschwindigkeit der Faser (1) an einem stromaufwärts des Extrusionspunktes des ersten Rohres (3) angeordneten ersten Punkt, um einen ersten Geschwindigkeitswert zu erhalten,
- Messen der Abspulgeschwindigkeit des ersten Rohres (3) an einem stromabwärts der Ausführung der Thermobehandlung angeordneten zweiten Punkt, um einen zweiten Geschwindigkeitswert zu erhalten,
- Berechnung der Längen der Faser (1) und des ersten Rohres (3) zwischen den ersten und zweiten Punkten an Hand der Abspulgeschwindigkeiten,
- Ermittlung des Verhältnisses zwischen den berechneten Längen, um ein Verhältnis der gemessenen Längen zu erhalten;
- Erzeugung eines Einstellwertes für das Längenverhältnis;
- Vergleichen des Einstellverhältnisses mit dem gemessenen Verhältnis; und
- Korrektur der Längsspannung in der Faser (1), wenn sich das gemessene Verhältnis von dem Einstellverhältnis in einer Richtung unterscheidet, welche die Abweichung aufhebt.

10. Verfahren nach einem der Ansprüche 1 bis 9,
**dadurch gekennzeichnet, dass**
es außerdem aus dem Aufbringen einer Längsspannung auf das erste Rohr (3) während und/oder nach der Thermobehandlung in einer Richtung besteht, die derjenigen der auf die Faser (1) aufgebrachten Spannung entgegengesetzt ist.

11. Verfahren nach einem der Ansprüche 1 bis 7,
**dadurch gekennzeichnet, dass**
es aus Folgendem besteht:
- Dass das erste Rohr (3) während der Einführung der Faser (1) in dasselbe einem mechanischen Zug ausgesetzt wird, wobei der mechanische Zug nach der Einführung gelöst wird.

12. Verfahren nach Anspruch 10,
**dadurch gekennzeichnet, dass**
eine Klebstoffschicht (4) zwischen dem ersten und dem zweiten Rohr (3,5) positioniert wird.
